# EUROPEAN PATENT SPECIFICATION

(11) **EP 0 980 634 B1**
(45) Date of publication and mention of the grant of the patent: **14.09.2005**
(21) Application number: 98908279.7
(22) Date of filing: 06.03.1998
(51) Int. Cl.: H04Q 7/32

(54) **AN ELECTRONIC DEVICE FOR THE FUNCTIONAL DOUBLING WITH MULTIPLE CARDS OF CELLULAR TELEPHONES**
ELEKTRONISCHE VORRICHTUNG ZUR FUNKTIONELLEN VERDOPPELUNG ZELLULARER TELEFONE MIT EINER VIELZAHL VON KARTEN
DISPOSITIF ELECTRONIQUE PERMETTANT UN DEDOUBLEMENT FONCTIONNEL DE TELEPHONES CELLULAIRES PAR CARTES MULTIPLES

(43) Date of publication of application: 23.02.2000
(73) Proprietor: Ferrara, Giovanni, 85025 Melfi (IT)
(72) Inventor: Ferrara, Giovanni, 85025 Melfi (IT)
(74) Representative: Mascioli, Alessandro
(86) International application number: PCT/IT1998/000048
(87) International publication number: WO 1999/045730

(56) References cited:
- EP-A- 0 556 970
- WO-A-97/05729
- WO-A-97/26719
- DE-A- 4 302 820
- GB-A- 2 269 512
- US-A- 5 420 914
- US-A- 5 657 373
- PATENT ABSTRACTS OF JAPAN vol. 097, no. 005, 30 May 1997 & JP 09 018965 A (DAINI DENDEN KK), 17 January 1997

## Description

The present invention concerns a cellular telephone, which may receive and perform telephone calls using different telephone numbers.

It is well known that at present there are contract telephone cards and cards until exhaustion of the utilization costs, which vary according to the hours of the day; furthermore, different coverings of the telephone signal on the territory are provided due to the presence, on the market, of different providers of the service.

In the prior art, some mobile phones adapted to work with more than one SIM card have already been proposed. DE 42 02 820 A1 discloses a mobile phone with a changeover device which automatically or manually differentiates between two telephone cards which belong to two different mobile radio networks, and which have a pre-defined or freely definable priority. WO 97/26719 proposes an external holder for a mobile phone, adapted to receive two or more SIM cards, with switch means to provide access to any one of them, and connected to the phone via an adaptor to be inserted in the built-in card reader of the phone.

The aim of the present invention is to provide a further, more practical solution for realizing a mobile phone, or cellular phone, adapted to work with multiple subscriber identification module (SIM) cards.

It is a particular aim of the present invention to have, on the same cellular phone, a plurality of different SIM cards and, possibly, of different providers, so as to choose each time the economically most convenient solution and to be found on all telephone numbers owned.

The aim set forth is reached by means of a cellular telephone according to claim 1.

The main features of the invention are:
- manual selection of the card, so as to allow the reception only of those calls having a preferential feature;
- automatic selection of the card, according to the user's number the entering call is directed to, allowing in fact the use of different numbers on a single cellular telephone;
- the possible utilization of telephone cards belonging to different providers, with the possibility of automatic selection of the economically most convenient card according to the hour in which the telephone is used.

The advantages of the device according to the present invention are many and considerable:
- convenience of the service due to the possibility of choosing the most suitable solution according to the place and the hour of the telephone call;
- a more complete covering of the territory;
- the possibility of inactivating determined telephone numbers, leaving free access to business calls or private calls.

The present invention will be described more in detail hereinbelow relating to the enclosed drawings in which some embodiments are shown.

Figure 1 shows an axonometric view of a cellular phone according to the present invention, for the contemporary use of a plurality of telephone cards, shown in exploded view.

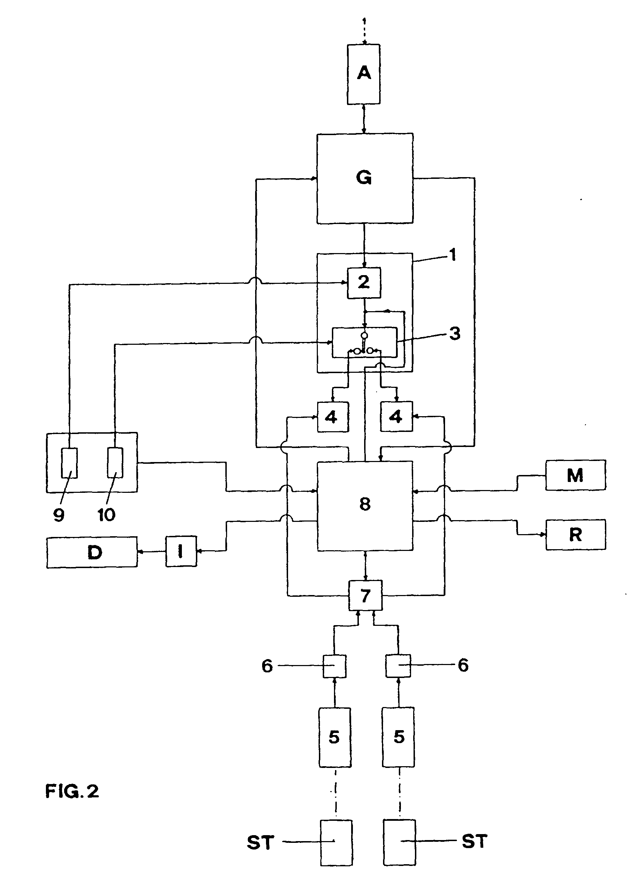

Figure 2 shows a block scheme of the functioning of the device according to the present invention to be applied to a cellular phone for transforming the same into a multi-card telephone, provided with the manual or automatic selection functions.

Figure 3 shows an electronic block scheme of the functioning of a multi-card cellular phone, provided with a device for the automatic card selection according to the hour in which the telephone card is used, with the lowest managing costs.

Figure 4 shows an axonometric view of a cellular phone provided with a multitrack telephone card reader.

Figure 5 shows in a block scheme the functioning of the cellular phone according to figure 4.

Figure 6 shows an axonometric view of a multiple reader of telephone cards, that may be used in combination with known cellular phones, and the functioning whereof is shown in a block scheme in figure 7.

The enclosed figures relates to a cellular phone adapted to cooperate with multiple telephone cards, comprising:
- an aerial A for both transmitting and receiving;
- a radio impulse provider G;
- a receiver R and a microphone M;
- a display D, managed by a video interface I;
- a keyboard T, provided with function keys, or equivalent selection means, for activating the additional functionality provided by the cellular phone; said function keys including at least a first key 9, a second key 10 and a third key 11.

For multiple card operation, the cellular telephone further comprises:
- a plurality of card readers 5 for telephone cards ST, associated to activation sensors 6, each of these card readers being adapted to receive one telephone card;
- a cpu 8 connected to said first, second and third selection keys, and arranged to provide the basic functions of a mobile phone;
- a selecting circuit 1, connected to said first, second and third function keys and to the cpu 8, comprising a processing unit 2 for the control of an electronic switch 3, that is arranged to divert the access of the cpu 8 towards one of a plurality of separate system memories 4 in which data of the selected card are contained, and
- an interface 7 connected to the cpu 8 and to the card readers 5, for data transfer from said card readers to the system memories 4.

Said function keys 9, 10 and 11 are provided for the selection of different operating modes: the first key 9 allows the manual selection of one of the telephone cards, so as to allow the reception of only those incoming calls directed to the telephone number of the selected card; the second key 10 enables the automatic selection of the card with the telephone number the incoming call is directed to; the third key 11 enables automatic card selection for outgoing calls, according to the point of time of the outgoing call. The latter mode is useful when having telephone cards with different rates, as the cpu 8 can select, at any moment, the most convenient one.

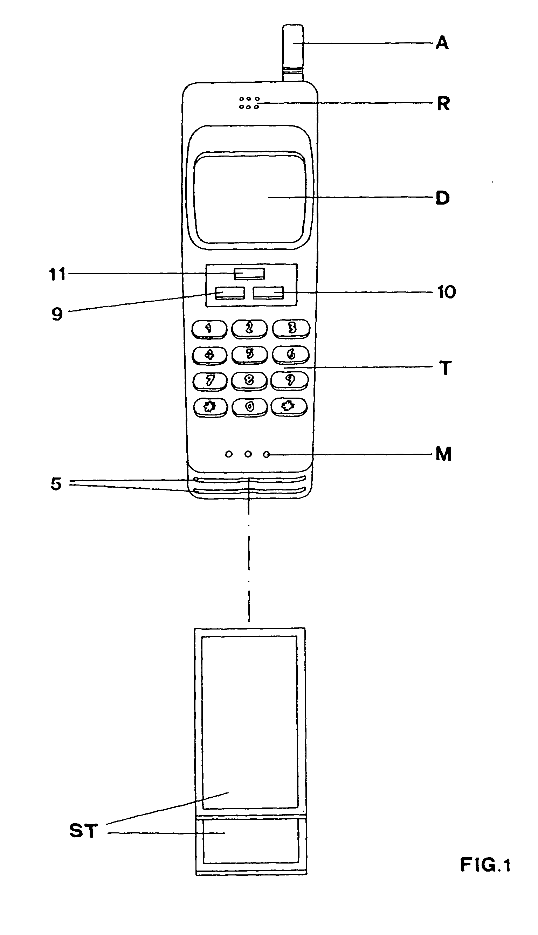

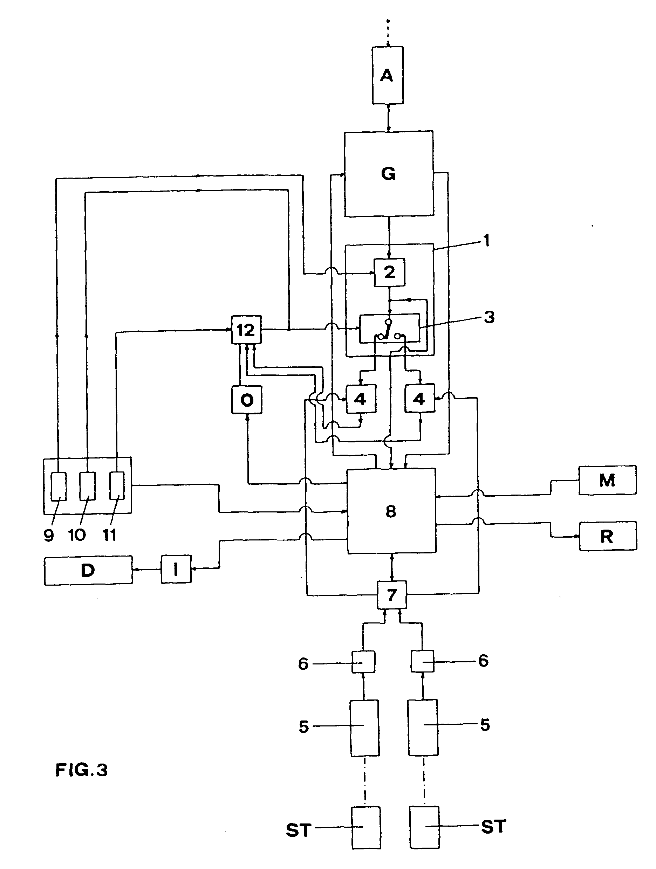

Referring now in detail to figures 1 and 3, the functioning of the telephone may be described as follows:
- the insertion of a telephone card into one of the readers 5 determines the noticing of the same by the sensors 6 and the consequent activation of the interface 7, for the transfer of the data concerning the inserted card (kind of the card, user's number, transmission frequency, etc.), into the system memories 4 connected to the used reader;
- if, on the contrary, a card is removed from the cellular phone, said sensors 6 signal to the interface 7 to proceed to cancelling the system memories 4 concerning the no longer used reader;
- the programming of the functioning mode of the device according to the present invention takes place by means of the function keys 9, 10 which respectively allow to connect or not the automatic selection of the telephone card to whose number the entering call relates to, and to manually select the card relating to the phone number that is to be activated, so that the functioning mode selected and the phone numbers made operative are visualized by the cpu 8 onto the display D by means of video interface I;
- if the selecting circuit 1 is activated, the radio impulses received by aerial A and decodified by the radio impulse provider G, arrive to processing unit 2 which notices the phone number the incoming call relates to, activates the electronic switch 3, limiting the access of the cpu 8 only towards the specific memory bank 4 in which the data of the phone card corresponding to the phone number requested by the incoming call are stored;
- once the informations requested by the system memory are obtained, cpu 8 can perform the connection with the calling phone, establishing with the latter a bidirectional full-duplex communication, in which the radio signals picked up by aerial A will be demodulated by the impulse provider G and sent to receiver R, in the same time in which the electric impulses coming from the microphone M are suitably modulated for transmission through aerial A.

If prepaid cards are used, the cpu 8 will provide to deduct, during the call, the cost of the running call updating it constantly through the interface 7 of the magnetic readers 5, and visualizing the residual credit of said card onto the display D.

The cellular phone is provided with a check device 12 for the automatic selection of the telephone card which, among the installed ones, offers the lowest rate according to the hour in which said phone is used.

Said device 12 may determine - if activated by means of the function key 11 - the hour in which the cellular phone is used by means of a system clock 0, and may find, by checking the system memories 4, the telephone card that offers the lowest rate according to the hour in which said phone is used.

Said check device 12 operates the electronic switch 3 so that the cpu 8 makes use of the system memories 4 containing the data relating to said card for starting the conventional procedures of telephonic connection.

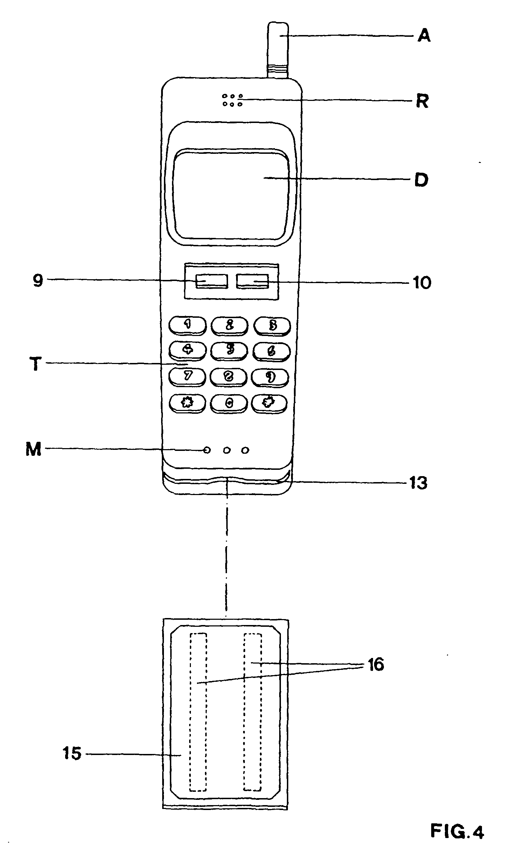

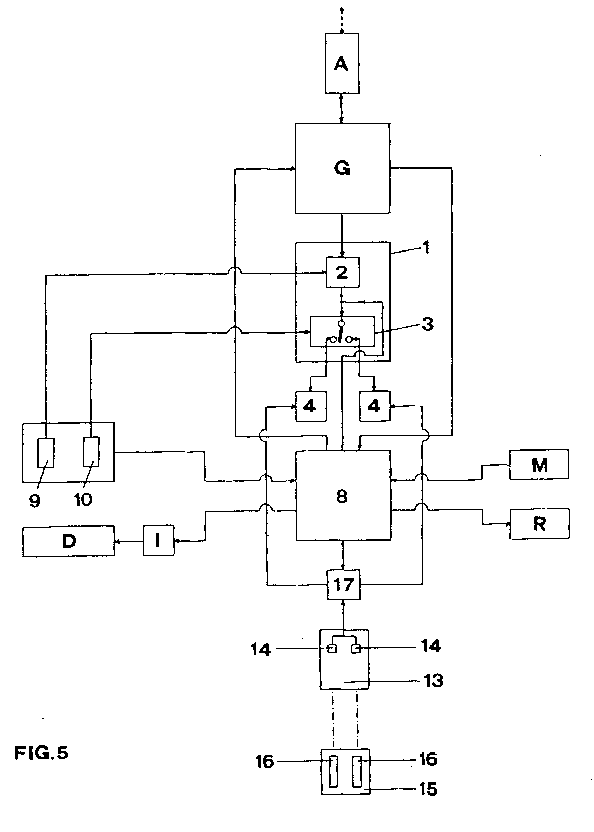

The variant of the device according to the present invention of figures 4 and 5 shows a cellular phone provided with a reader 13 specifically planned for the use of the special multi-track telephone cards 15, which have on their surface a plurality of magnetic tracks 16, each containing the informations usually stored onto one single card of known kind.

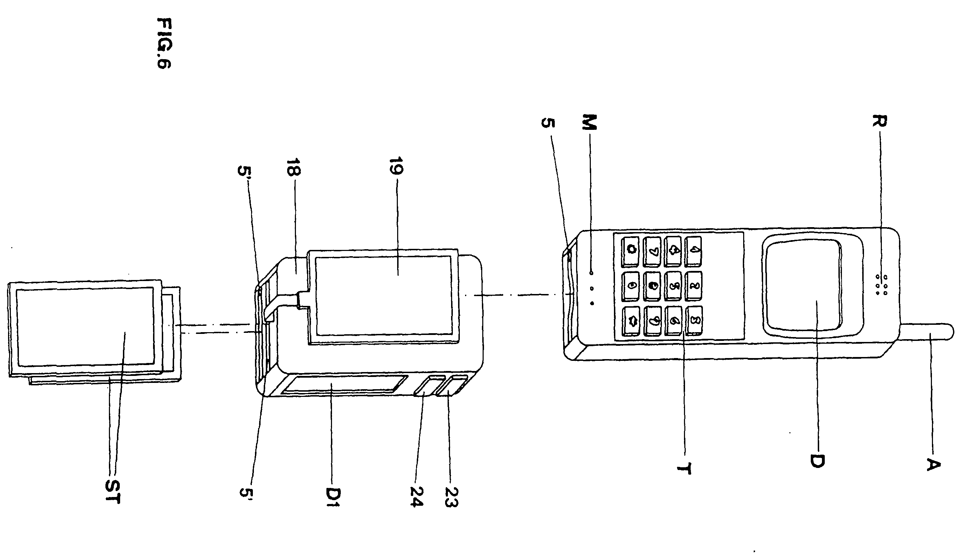

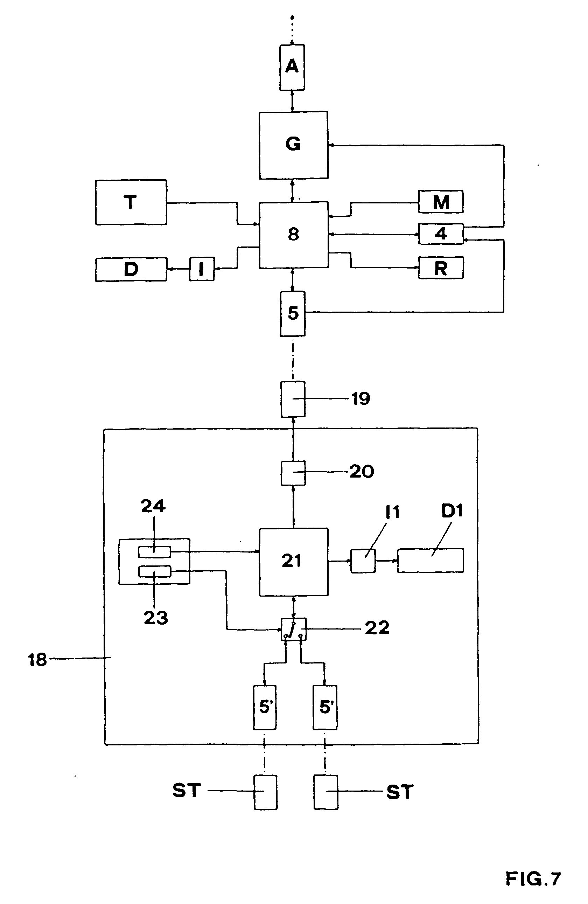

Inside said readers 13, reading and writing means 14 are provided in a number equal to the one of the magnetic tracks 16 on said cards 15 which, managed by a special interface 17, allow the transfer of the data from cards 15 to system memories 4 and, if necessary, the updating of the data contained therein. Figures 6 and 7 concern a multiple telephone card ST reader 18 of known kind, that may be used with common cellular phones not arranged for the multi-card functioning, consisting of the following elements:
- a connection card 19, for the connection of the device to common cellulars;
- a codified impulse generator 20;
- two or more readers 5' of telephone cards ST, managed by cpu 21 of the multiple reader 18, by means of dedicated interface 22;
- function keys 23, 24, respectively for the selection of the used card and for the sending of the data of the same to the connected cellular;
- a display D1, controlled by cpu 21 by means of a video interface I1.

The multiple reader 18 is connected, by means of the connection card 19, to common cellulars exploiting the card readers 5 of the latter, while the ST cards are inserted into the readers 5' provided in the device and selected each time according to the telephone number that is to be operated on the cellular phone.

The functioning of said variant may be described as follows:
- the selection of the telephone card to be used is performed by means of the function key 23, that prepares the interface 22 for the access to the reader 5' in which the chosen card has been inserted, and at the same time it orders the cpu 21 of said multiple reader 18 to visualize the data of the same onto the display D1, by means of the video converter I1 ;
- when function key 24 is pressed, cpu 21 gets to reader 5' by means of interface 22 - said reader 5' containing the selected card -, collects the data contained therein and sends them, suitably codified by impulse generator 20, through connection card 19 to the cellular phone to which the multiple reader 18 is connected;
- said data are received by reader 5 of the cellular phone which reads them as the insertion into the same of a new telephone card, and transfers them into the system memories 4, thus preparing the cpu 8 of the cellular phone to the use thereof during the telephone connection procedures.

## Claims

1. A cellular telephone adapted to cooperate with multiple telephone cards, which is arranged to receive incoming telephone calls and to perform outgoing telephone calls using different user's telephone numbers associated to different telephone cards, said telephone comprising:
- a plurality of card readers (5) of telephone cards (ST), associated to activation sensors (6), each of these card readers allowing the insertion of one telephone card,
- first selection means (9) for the manual selection of one of said telephone cards, so as to allow the reception only of those calls directed to the telephone number associated to said selected telephone card,
- second selection means (10) for the automatic selection of one of said telephone cards, according to the user's telephone number the incoming call is directed to,
- third selection means (11) for the automatic selection of one of said telephone cards according to the point of time at which the outgoing telephone call is performed,
- a cpu (8) connected to the first, second and third selection means and arranged to provide the basic functionality of a common cellular telephone,
- a selecting circuit (1), connected to the first, second and third selection means and the cpu (8), and comprising a processing unit (2) for the control of an electronic switch (3) that is arranged to divert the access of the cpu (8) towards one of a plurality of separate system memories (4), in which the data relating to the selected telephone card are contained, and
- an interface (7), connected to the cpu (8) and the card readers (5) for the transfer of the data concerning the telephone cards present in the card readers (5) towards the system memories (4).

2. A cellular telephone according to claim 1, further comprising a check device (12) that can be activated by said third selection means (11), and is adapted to operate an automatic selection of one of the available installed telephone cards, to be used for an outgoing call, wherein:
- data relating to the rates of the installed cards are stored on said separate system memories (4), and
- the automatic selection operated by said check device (12) depends on the point of time and on said data relating to the rates of the available cards, for choosing the card with the lowest rate.

3. A cellular telephone according to claim 1 or 2, wherein said first selection means (9), second selection means (10) and third selection means (11) are function keys provided on said telephone.

## Patentansprüche

1. Ein für den Betrieb mit mehreren Telefonkarten ausgelegtes Funktelefon, welches so eingerichtet ist, dass unter Verwendung verschiedener Anwender-Telefonnummern in Verbindung mit unterschiedlichen Telefonkarten eingehende Telefonate empfangen und ausgehende Telefonate vorgenommen werden können, wobei dieses Funktelefon die folgenden Bestandteile umfasst:
- eine Vielzahl von an Aktivierungssensoren (6) angeschlossenen Lesegeräten (5) für Telefonkarten (ST), wobei sich in jedes dieser Kartenlesegeräte eine Telefonkarte einlegen lässt;
- erste Auswahlvorrichtungen (9) für die manuelle Auswahl einer der besagten Telefonkarten, um so nur den Empfang von Anrufen zuzulassen, die an die mit der besagten, ausgewählten Karte verbundene Telefonnummer gerichtet sind;
- zweite Auswahlvorrichtungen (10) für die automatische Auswahl einer der besagten Telefonkarten entsprechend der Anwender-Telefonnummer, an die der eingehende Anruf gerichtet ist;
- dritte Auswahlvorrichtungen (11) für die automatische Auswahl einer der besagten Telefonkarten entsprechend dem Zeitpunkt, an dem die ausgehende Telefonverbindung aufgebaut wird;
- eine mit den ersten, zweiten und dritten Auswahlvorrichtungen verbundene CPU (8), die für die Bereitstellung der grundlegenden Funktionalität eines herkömmlichen Funktelefons eingerichtet ist;
- ein Auswahlschaltkreis (1), der mit den ersten, zweiten und dritten Auswahlvorrichtungen sowie mit der CPU (8) verbunden ist und eine Processing-Einheit (2) für die Steuerung eines elektronischen Schalters (3) umfasst, welcher so eingerichtet ist, dass er den Zugang der CPU (8) zu einem von mehreren separaten Systemspeichern (4) umleitet, in denen die Daten der jeweils ausgewählten Telefonkarte hinterlegt sind und
- eine mit der CPU (8) und den Kartenlesegeräten (5) verbundene Schnittstelle (7) für den Transfer der Daten hinsichtlich der in den Lesegeräten (5) befindlichen Telefonkarten in die Systemspeicher (4).

2. Ein Funktelefon nach Anspruch 1, welches weiterhin eine Kontrolleinrichtung (12) umfasst, die mittels besagter dritter Auswahlvorrichtungen (11) aktiviert werden kann und für die Durchführung einer automatischen Auswahl einer der verfügbaren, installierten Telefonkarten im Zuge des Aufbaus einer ausgehenden Telefonverbindung eingerichtet ist, wobei:
- die auf die Gebühren der installierten Karten bezüglichen Daten in besagten separaten Systemspeichern (4) hinterlegt sind und
- die von besagter Kontrolleinrichtung (12) vorgenommene automatische Auswahl vom Zeitpunkt sowie von besagten Daten hinsichtlich der Gebühren der verfügbaren Karten abhängt, damit die Karte mit den niedrigsten Gebühren ausgewählt wird.

3. Ein Funktelefon nach Anspruch 1 oder 2, bei dem besagte erste Auswahlvorrichtungen (9), zweite Auswahlvorrichtungen (10) und dritte Auswahlvorrichtungen (11) an besagtem Funktelefon eingerichtete Funktionstasten sind.

## Revendications

1. Un téléphone cellulaire approprié pour l'usage de multiples cartes téléphoniques, qui peut recevoir et effectuer des appels utilisant différents numéros de téléphone de l'utilisateur associés à différentes cartes téléphoniques, ledit téléphone comprenant:
- de nombreux lecteurs (5) de cartes téléphoniques (ST), associés à des capteurs d'activation (6), chacun de ces lecteurs permettant l'introduction d'une carte téléphonique,
- premières moyens de sélection (9) pour la sélection manuelle de l'une desdites cartes téléphoniques, pour permettre la réception seulement des appels pour le numéro de téléphone associé à ladite carte téléphonique sélectionnée,
- deuxièmes moyens de sélection (10) pour la sélection automatique de l'une desdites cartes téléphoniques selon le numéro de téléphone de l'utilisateur auquel l'appel de l'extérieur est adressé;
- troisièmes moyens de sélection (11) pour la sélection automatique de l'une desdites cartes téléphoniques selon le moment temporel auquel l'appel vers l'extérieur est effectué.
- une CPU (8) connectée aux premières, deuxièmes et troisièmes moyens de sélection, ladite CPU étant adaptée à fournir la fonctionnalité de base d'un téléphone cellulaire courant,
- un circuit de sélection (1), connecté aux premières, deuxièmes et troisièmes moyens de sélection et à ladite CPU (8), et comprenant une unité de traitement (2) pour la commande d'un interrupteur électronique (3) pour dévier l'accès de la CPU (8) à une parmi une multiplicité de mémoires de système séparées (4), où les données relatives à la carte téléphonique sélectionnée sont contenues, et
- une interface (7), connectée à la CPU (8) et aux lecteurs de carte (5) pour le transfert de données concernant les cartes téléphoniques présentes dans les lecteurs de carte (5) vers les mémoires de système (4).

2. Un téléphone cellulaire selon la revendication 1, qui comprend en plus un dispositif de contrôle (12) qui peut être activé par lesdits troisièmes moyens de sélection (11), et est adapté à effectuer une sélection automatique d'une des cartes téléphoniques installées disponibles, à utiliser pour effectuer un appel vers l'extérieur, dans lequel:
- les données relatives aux tarifs des cartes installées sont stockées sur lesdites mémoires de système séparées (4), et
- la sélection automatique effectuée par ledit dispositif de contrôle (12) dépend du moment temporel et desdites données concernant les tarifs des cartes disponibles, pour choisir la carte avec le tarif le plus bas.

3. Un téléphone cellulaire selon la revendication 1 ou 2, dans lequel lesdits premières moyens de sélection (9), deuxièmes moyens de sélection (10) et troisièmes moyens de sélection (11) sont des touches fonctions fournies sur ledit téléphone.
